# EUROPEAN PATENT APPLICATION

(11) **EP 1 014 653 A2**
(43) Date of publication of application: **28.06.2000**
(21) Application number: 99310474.4
(22) Date of filing: 23.12.1999
(51) Int. Cl.: H04L 29/06, H04M 11/00

(54) **Graphical identification of called and calling parties**

(30) Priority: 28.12.1998 US 220961
(71) Applicant: NORTEL NETWORKS CORPORATION, Montreal, Quebec H2Y 3Y4 (CA)
(72) Inventor: Cruickshank, Brian, Oakville, Ontario L6L 4N8 (CA); Brennan, Paul Michael, Toronto, Ontario M4G 2G1 (CA); Lumsden, John Eric, Toronto, Ontario M4S 2L4 (CA)
(74) Representative: Lawrence, Malcolm Graham

(57) **Abstract**

The invention provides a method, apparatus and system for providing graphical identification of called and calling parties associated with a call. In general terms, a communications device of a called party is presented in the course of a call with graphical information associated with a calling party. In another aspect, a communications device of the calling party is presented in the course of the call with graphical information associated with the called party.

## Description

### FIELD OF THE INVENTION

The present invention relates generally to communications systems, and more particularly, to a method, apparatus and system for providing graphical information associated with called and calling parties in relation to a communication, and to a computer readable medium containing codes for directing a computer to provide same.

### BACKGROUND

With the wide use of telephones, pagers and cell phones having digital displays, a growing number of service providers in the telephony market now offer caller line identification services to subscribers. In conventional caller line identification systems a telephone number of a calling party is displayed at the time an incoming call is received. Depending on the available services to which the called party subscribes, a called party's display phone may also display date and time of day information and other alpha-numeric information, such as the name of the subscriber to a caller line, when an incoming call arrives at the called party's phone.

In a more recent advancement, U.S. Patent No. 5,761,279 issued June 2, 1998 to Bierman et al. describes a visual calling person display for caller line identification in the form of a graphical image identifying the calling party which is transmitted to the called party's display terminal over a public switched telephone network (PSTN) at the time a call arrives at the called party's terminal. Expanded or extensive wide-spread use of the system of Bierman et al. would require significant modifications to central office infrastructure in order to provide a large number of users with such graphical caller identification. Thus, there is a need to provide a more flexible system for graphical caller identification which does not necessitate significant modifications to existing telephony networks.

Furthermore, with the rapid emergence of data networks, there is a need to leverage the technology available with data networks. As a result, it would be desirable to provide a system for graphical caller identification which supports an interoperable mechanism for the provision of such identification services in a mixed telephony and data network environment, preferably using ubiquitous communications technologies such as the TCP/IP protocol suite and World Wide Web resources such as web servers in view of the proliferation of such resources and servers.

In addition, while presenting a called party with information pertaining to a calling party assists a called party in identifying the calling party in the course of a call, it does not provide the calling party with useful information about the called party. Thus, it would be desirable to provide a calling party with graphical identification information associated with the called party.

### SUMMARY OF THE INVENTION

The above problems are addressed by providing an addressee of a communication with graphical information associated with the source of the communication via a data network and providing the source of the communication with graphical information associated with the addressee of the communication.

In accordance with one aspect of the invention, there is provided a method of acquiring a graphical image associated with a source of a communication. In this aspect, the method includes identifying a source party network resource associated with the source of the communication where one or more graphical images associated with the source can be retrieved. A destination party network resource associated with a destination of the communication is also identified. The method further includes causing the identified source party network resource to transmit the one or more one graphical images via a data network to the destination party network resource for presentation of the graphical images to a communications device associated with the destination.

Preferably, transmission of the one or more graphical images is initiated via the destination party network resource. For instance, in one embodiment an instruction signal is generated including an instruction sequence executable by the destination party network resource for initiating retrieval of the one or more graphical images from the source party network resource. In this embodiment, the instruction signal may be transmitted to the destination party network resource to initiate the retrieval of the graphical images from the source party network resource. Advantageously, the destination party network resource may concurrently proceed with initiating communications between the source and the destination while the graphical information is being retrieved.

In another embodiment, causing the transmission of the one or more graphical images from the source party network resource to the destination party network resource includes generating a control signal for identifying a location of the source party network resource for the destination party network resource. The control signal is transmitted to the destination party network resource to initiate retrieval by the destination party network resource of the one or more graphical images from the source party network resource.

In another variation, the media type associated with the communication is identified and transmission of a graphical representation associated with the media type is initiated to the communications device. Advantageously, in this variation the destination may be presented with both graphical information pertaining to the source and graphical information pertaining to the media type used by the source.

In another embodiment, a digital representation of a sound waveform associated with the source is transmitted to the communications device, providing the destination or addressee with audio information identifying the source.

In providing the destination with graphical information associated with the source, the communication may be related to a pre-selected graphical image associated with the source which has been pre-selected by the source. This variation offers the flexibility of pre-selecting graphical information according to the type of communication or the type of recipient or destination of the communication.

In another embodiment, the source may be provided with graphical information associated with the destination of the communication, thereby making available to both calling and called parties graphical information about each other. Preferably, such graphical information is also accompanied by textual information pertaining to the other party to the communication. Where graphical information associated with the destination is available, graphical information pre-selected by the destination party for particular types of communications or recipients may be transmitted to the source.

In yet another embodiment, the graphical information associated with the source is stored locally at the destination party resource or the communications device associated with the destination. In another embodiment, graphical information associated with the called party is stored locally on a resource associated with the source. These latter two embodiments offer the advantage of enhanced graphical call logs for retention by the recipient of graphical information associated with another party to a call.

In accordance with another aspect of the invention, there is provided a computer readable medium including codes for directing a network computer to identify a source party network resource associated with the source of the communication where graphical information associated with the source can be retrieved. The codes also preferably direct the network computer to identify a destination party network resource associated with a destination of the communication. Further codes direct the network computer to cause the source party network resource to transmit the at least one graphical image via a data network to the destination party network resource for presentation of the graphical information to a communications device associated with the destination.

In accordance with another aspect of the invention, there is provided an apparatus for performing the above method. In one embodiment, the apparatus includes means for identifying (a) a source party network resource associated with the source of the communication where at least one graphical image associated with the source can be retrieved, and (b) a destination party network resource associated with a destination of the communication. In this embodiment, the apparatus further includes means for causing the source party network resource to transmit the at least one graphical image via a data network to the destination party network resource for presentation of the at least one graphical image to a communications device associated with the destination.

In another embodiment, the apparatus includes a computer server operable to communicate with a plurality of networked user terminals and memory connected to the computer server. In this embodiment, the memory includes computer codes for directing the computer server to:
identify (i) a source party network resource associated with the source of the communication where at least one graphical image associated with the source can be retrieved, and (ii) a destination party network resource associated with a destination of the communication; and
cause the source party network resource to transmit the at least one graphical image via a data network to the destination party network resource for presentation of the at least one graphical image to a communications device associated with the destination.

In one variation, the apparatus includes a database, internetworked with the computer server, for storing graphical information associated with subscribers of a communications system for presentation in conjunction with the communication to one or both of the source and the destination parties.

Advantageously, the embodiments of the present invention may be applied to communications between two or more parties. For further flexibility, the features of the present invention may be applied, in a communication, to (i) the presentation to the addressee of graphical information associated with the source, (ii) the presentation to the source of graphical information associated with an addressee, and (iii) the exchange of graphical information between both source and addressee. In this way, the present invention provides graphical identification of called and calling parties for application in the processing of a call between two or more parties.

In accordance with another aspect of the invention, there is provided a system for performing the aforementioned method. In one embodiment, the system includes a source party network resource associated with the source of the communication, a destination party network resource, and a computer server operable to communicate with the destination party network resource. In this embodiment, the source party network resource includes at least one graphical image associated with the source and the computer server includes memory with computer codes for directing the computer server to cause the source party network resource to transmit, in association with the communication, the at least one graphical image via a data network to the destination party network resource for presentation of the at least one graphical image to a communications device associated with the destination.

In yet another aspect of the invention there is provided a graphical caller identification system for use over a data network. Preferably, at least one web server is connected to a gatekeeper via the network. A call initiated by a caller is transmitted to the network address for the gatekeeper where the called party's local web server address is resolved. A request is sent to the called party's web server from the gatekeeper initiating instructions on the web server to pass caller information including the call request to the called party's end-user communication terminal. In the single web server model, the caller's graphical identification information is also retrieved by the web server and forwarded to the called party for display during the call. The graphical caller identification data may also be presented to the called party's terminal before a call is connected to enable graphical call screening.

Other aspects and features of the present invention will become apparent to those ordinarily skilled in the art upon review of the following description of specific embodiments of the invention in conjunction with the accompanying drawings.

### BRIEF DESCRIPTION OF THE DRAWINGS

In the accompanying drawings which illustrate embodiments of the invention,
- FIG. **1**: is a schematic diagram of a graphical message waiting notification system within a networked environment according to a first embodiment of the invention;
- FIG. **2**: is a schematic representation of a data structure for user profiles accessed by messaging server software of the graphical message waiting notification system of FIG. **1**;
- FIG. **3**: is a schematic representation of a data structure accessed by a messaging system for storing message profiles in accordance with the first embodiment of the present invention;
- FIG. **4**: is a schematic representation of another data structure accessed by a messaging system for providing graphical message notification in accordance with the first embodiment of the present invention;
- FIG. **5**: is a block diagram of the graphical message waiting notification system shown in FIG. **1**;
- FIG. **6**: is a block diagram illustrating layering of communication functions of the graphical message waiting notification system shown in FIG. **1**;
- FIG. **7**: is a block diagram illustrating a called party's end-user communications device of the graphical message waiting notification system shown in FIG. **1**;
- FIG. **8**: is a flow diagram illustrating the operation of a graphical message waiting notification system including the operation of the system of the first embodiment shown in FIG. **1**;
- FIG. **9**: is a flow diagram illustrating the monitoring operations carried out by a computer server at the direction of messaging server software in accordance with the first embodiment of the invention in FIG. **1**;
- FIG. **10**: is a block diagram of a graphical message waiting notification system including a web notification server in accordance with a second embodiment of the invention;
- FIG. **11**: is a flow diagram illustrating the operation of various graphical message waiting notification services in accordance with the second embodiment of the invention in FIG. **10**;
- FIG. **12**: is a block diagram of a first network architecture implementing a communications system according to a third embodiment of the invention;
- FIG. **13**: is a flow diagram of operations executed by network resources of the embodiments shown in FIG. **12** or **17** to achieve graphical caller identification over a data network;
- FIG. **14**: is an expanded view of a lookup table shown in FIG. **12**;
- FIG. **15** and **16**: illustrate HTTP messages transmitted by network resources in the network architectures shown in FIG. **12** and **17**; and
- FIG. **17**: is a block diagram of a second network architecture according to a fourth embodiment of the invention.

It will be appreciated that for simplicity and clarity of illustration, elements illustrated in the accompanying drawings have not necessarily been drawn to scale. For example, the dimensions of some of the elements are exaggerated relative to other elements for clarity. Further, where considered appropriate, reference numerals and labels have been repeated among the drawings to indicate corresponding or analogous elements. Where also considered appropriate, descriptive tags defined in the specification have been repeated herein.

### DETAILED DESCRIPTION

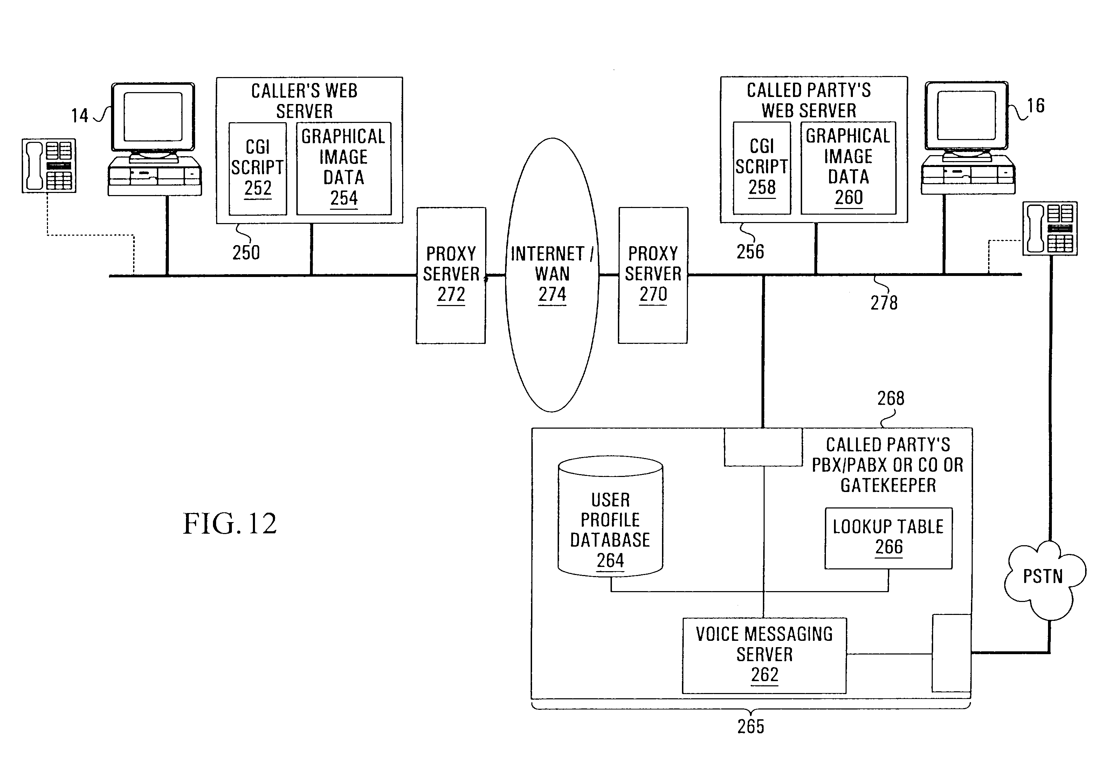

In the present invention there is provided a method, apparatus and system for providing an addressee of a stored message with a graphical notification associated with a source of the stored message. In general terms, a communications device of the addressee is presented with the graphical notification in the form of an information signal which relates the stored message to at least one graphical image associated with the source of the stored message. The flexibility of present invention further provides for graphical identification of called and calling parties for application in the processing of a call or other connected communications between two or more parties. This latter aspect is described in further detail with reference to FIG. **12** to **17** below.

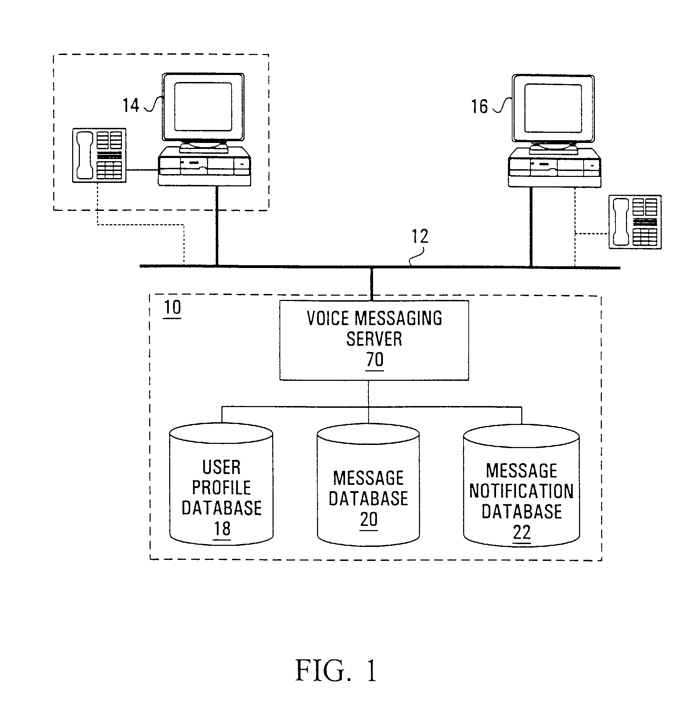

Referring to FIG. **1**, a graphical message waiting notification system according to a first embodiment of the invention is shown generally at **10** (also referred to herein, for ease of reference, as graphical notification system **10**). For the purposes of the illustrative embodiment of FIG. **1**, graphical notification system **10** includes an integrated messaging server system which provides voice messaging and graphical message notification services to subscribing users over network **12**. However, a voice messaging system (or such other message acquisition services) may be separately associated with graphical notification system **10**, provided graphical notification system **10** includes graphical message notification services relating messages stored in the voice messaging system to graphical notifications associated with the source(s) of such stored messages.

As noted above, system **10** is a "graphical" notification system. Although, in general, the term "graphical" may have several different meanings depending upon the context, persons skilled in the art will appreciate that in this specification, the terms "graphic", "graphical", "graphically", "graphical information", "graphical image" and the like are each used to refer to (as well as refer to the use of) computer graphics, and more particularly to one or more digital (or digitized) pictures, photos, icons, and/or video frames (with or without audio data), for display on a display device such as a monitor, a liquid crystal display (LCD), a digital screen or other electronic display device capable of displaying computer graphics. The terms "text" and "textual information", on the other hand, are used in this specification to refer to information selected from a binary-coded character set consisting of one or more letters, numbers and/or other typographic symbols. Examples of binary-coded character sets include ASCII, EBCDIC and BCD.

In the embodiment shown in FIG. **1**, the graphical notification system **10** is connected to network **12** which interconnects with other communications devices such as source terminal device **14** and destination terminal device **16**. Network **12** is, for purposes of illustration, an Ethernet-based local area network (LAN). Terminal devices **14** and **16** represent end-user communications devices which each either include, or are connected in communication with, a display device for the display of graphical information transported over network **12**.

As an overview, graphical notification system **10** provides a mechanism for graphically notifying an addressee, via an end-user communication device having graphical display capabilities, of waiting messages stored within message database **20** (or accessible from a separate messaging system associated with system **10**). When a communication is initiated by a source connected to network **12**, such as source terminal device **14**, the source attempts to make a connection with the addressee of the communication at destination device **16**, either directly or indirectly via graphical notification system **10** or another network resource supporting such communication.

If the source cannot connect with the addressee within a predetermined period of time, the source is directed by graphical notification system **10** to the message recording services provided by system **10** if such services are available to the addressee. When a message from the source is recorded for the addressee, the graphical notification system **10** retrieves graphical information associated with the source so as to form a graphical notification identifying the source. To this end, graphical notification system **10** generates an information signal relating the stored message to at least one graphical image associated with the source of the stored message. The information signal is transmitted by graphical notification system **10** to the addressee's destination terminal device **16** via network **12** preferably in response to a request for pending notifications from the addressee received by system **10.**

For the purposes of illustration, a communication from a source to an addressee is discussed below in the context of a telephone call from a calling party to a called party. It will be appreciated, however, that a communication in the context of the present invention may also include communications involving other media types such as a cell phone transmission, a pager message, a fax communication, an audio/video communication such as a video conference call over a data network, a voice call over IP, or an electronic mail (email) transmission (of arbitrary media, e.g. voice, graphics, video, text or combinations thereof). As well, the source associated with a stored message may be identified either by association with a subscriber of the caller line from which the stored message originated or an identifier associated with the source such as a user ID or a calling party ID.

It will also be appreciated by persons skilled in the art that network **12** can be any one of a variety of network infrastructures. For instance, network **12** may be another type of LAN, such as a Token-ring LAN or a carrier sense multiple access with carrier detection (CSMA/CD) LAN. Alternatively, or in addition, network **12** may include a wide area network (WAN) deployed using a network topology such as X.25, frame relay, asynchronous transfer mode (ATM) or synchronous optical network/synchronous digital hierarchy (SONET/SDH), or internetworked combinations thereof. Network **12** may alternatively be a circuit switched network, such as a public switched telephone network (PSTN) or a privately leased switched network (such as a T1, E1, T3 or E3 circuit switched network). In any combination of the above network topologies, network **12** may be a public network, a private network or intranet, or part of the Internet.

Furthermore, while graphical notification system **10** is discussed in the context of a voice messaging system, graphical notification system **10** may in other embodiments include, in the alternative or in addition, other messaging services such as audio/video messaging, fax messaging or email messaging. Similarly, terminal devices **14** and **16** may include one or several different types of (end-user) communications devices, such as network computer terminals, networked personal computers, network display telephones, telephones optionally connected to associated personal computers (PCs), public display telephones, or wireless communications devices such as mobile telephones connected over a wireless network, provided such communications devices include, or are connected to, a display device so that graphical notification information may be received by the terminal device and graphically displayed on the display device, preferably along with other information such as the calling number, the date and time of the associated message and the caller name.

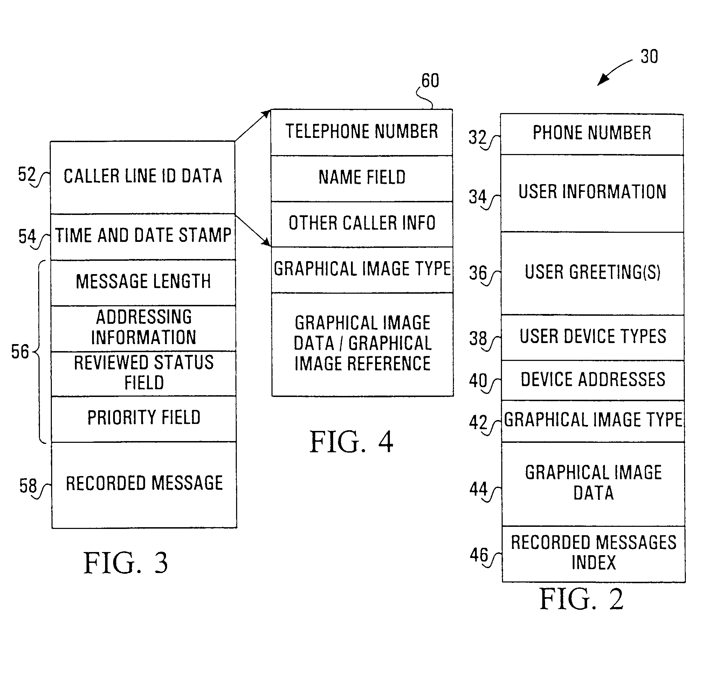

Referring to FIG. **1** and **2**, subscribing users of graphical notification system **10** are each allocated a user profile **30** which is stored within the user profile database **18**. Each user profile **30** provides one or more data structures for the management and provision of user identification information and subscription services. User profile **30** includes a graphical data field **44** related to a digital representation of at least one graphical image associated with the user corresponding to the user profile. Graphical data field **44** may include either a reference to one or more graphical images, or digital representations of such graphical images. As will be seen below, when a subscribing caller records a message for a subscribing called party, the caller's graphical image data is accessed by graphical notification system **10** and appended to graphical notification message **60** which is stored in memory allocated to the called party within a message notification database **22** for subsequent retrieval and presentation to the called party.

User profile **30** may include a variety of other fields. For instance, for a subscriber of a voice messaging system, user profile **30** preferably is structured to include the subscriber's phone number, name and address information, and recorded greetings in fields **32**, **34**, and **36**, respectively. Preferably, user profiles are used for calling subscribers and called subscribers. Furthermore, user profile **30** may include a graphical identification field **42** to support the provision of different classes of graphical information. For instance, graphical images may be digital representations categorized as single images, digital video frames, one or more graphical icons or digital audio/video data. Supporting a variety of classes of graphical information has the advantage of extending the functionality of graphical notification system **10** to provide a more flexible range of services to subscribers who may have different classes of end-user display devices.

As another variation, user profile **30** may include a field **38** identifying the type of end-user communications device registered with the voice messaging system. This latter arrangement provides graphical notification system **10** with the capacity to readily determine which services a subscribing user's communication device is capable of handling. This can be of advantage when system **10** supports a variety of different classes of graphical information since not all end-user communications devices may support all types of graphical information. Recording a subscriber's type of communication device within the user profile facilitates the advanced determination by system **10** of what graphical data of a caller is suitable to present to the called party's display device.

User profile **30** may also include address information for a variety of subscriber devices as exemplified by field **40**, so as to provide graphical notification system **20** further flexibility in notifying an addressee via one or more devices identified within field **40**. For the illustrative embodiment shown in FIG. **1** and **2**, terminals **14** and **16** include a telephone set and a personal computer which are co-located at a user's workstation and are registered in user profile database **18**, using fields **38** and **40**, as belonging to associated subscribers.

In the embodiment illustrated in FIG. **1** and **2**, user profile **30** is also shown having an index **46** to the user's recorded/waiting messages received by graphical notification system **10**. It will nevertheless be appreciated that a user's recorded messages may be referenced in one of many different ways. By way of example, the recorded messages may be stored directly as part of user profile **30**. Alternatively, the recorded messages may be cross-referenced in a separate table cross-referencing users with such messages, rather than having an index within user profile **30**.

Referring to FIG. **1** and **3**, a received message is allocated by graphical notification system **10** to a message profile defined by a data structure **50**. Message profiles for a called party are stored within message database **20** for subsequent retrieval and presentation upon the called party requesting the corresponding recorded message from graphical notification system **10**. As illustrated by message data structure **50**, each message profile includes a field **58** for the caller's recorded message as well as message identification fields **52** for storing caller line ID data such as the caller's telephone number and name. Other fields **54** and **56** may also be provided for recording information such as the time and date the associated message was recorded, the message length or duration, the reviewed status of the message, the priority of the message, and addressing information identifying, for example, a list of other recipients of the recorded message.

When a message is received from a caller and recorded, graphical notification system **10** retrieves information identifying the caller from the caller's user profile within user profile database **18** and a message profile is generated. The retrieved identification information is preferably appended by graphical notification system **10** to the message profile associated with the recorded call and the message profile is stored by system **10** in the message database **20**. Graphical notification system **10** furthermore generates an information signal in the form of a message notification packet structured according to a data structure such as data structure **60**. The message notification packet encapsulates caller information including the caller's phone number and graphical data related to a digital representation of at least one graphical image available from the caller's user profile within user profile database **18**. Thus, for the first embodiment shown in FIG. **1**, the information signal generated relates the stored message with at least one graphical image associated with the source of the stored message. The graphical data stored within the message notification packet may be an actual digital representation of an image from the caller's user profile, a reference to the digital representation such as a pointer reference, or a network address identifying a specific location on network **12** where the actual digital representation may be retrieved for display on the called party's communications terminal when the called party reviews pending message notifications.

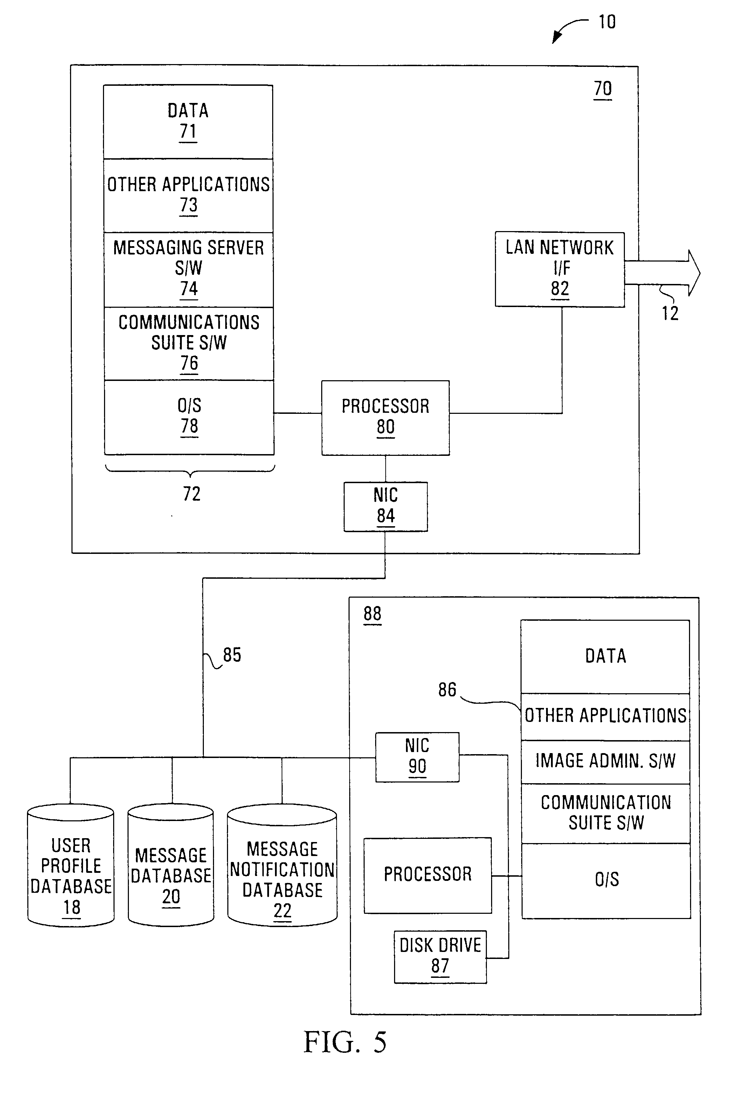

Referring to FIG. **5**, there is shown a more detailed representation of graphical notification system **10** from the first embodiment in FIG. **1**. As shown in FIG. **5**, graphical notification system **10** includes computer server **70**, memory **72**, messaging server software **74**, user profile database **18**, message database **20** and message notification database **22**. Computer server **70** is a networked computer which is directly or indirectly connected to network **12** (see FIG. **1**) and is a server suitable for hosting messaging services for a plurality of subscribers. By way of example, computer server **70** may be a Reduced Instruction Set Computing (RISC) device such as a Sun Microsystems UltraSparc(TM) Station or an IBM RS/**6000**(TM), or a personal computer suitable for hosting messaging services such as a Compaq Proliant (TM) or an IBM NetFinity(TM) server. Preferably, computer server **70** is scalable to the needs of graphical notification system **10** as the number of subscribers increases.

As illustrated in FIG. **5**, memory **72** provides a memory store for software and data residing on computer server **70** such as messaging server software **74**, communications suite **76** and operating system **78**. Memory 72 also stores data **71** for remote or local retrieval and other applications **73**. Operating system **78** is preferably a multitasking operating system such as Unix, Linux, Microsoft Windows NT(TM), Sun Solaris(TM) or IBM AIX(TM). Communications suite **76** includes software providing transport and routing communication protocols as well as network interface software for enabling communications between users over network **12** (FIG. **1**). Preferably, communications suite **76** includes the well known and ubiquitous TCP/IP suite of services, although other communications protocols, such as those adhering to the Open Systems Interconnection (OSI) reference model in the International Standards Organization (ISO) standard **7498**, or layered arrangements which make use of TCP or IP with other available protocols, may be used in the alternative, so long as such communications suites are sufficient to provide a networked environment for use of the graphical message waiting notification system contemplated herein.

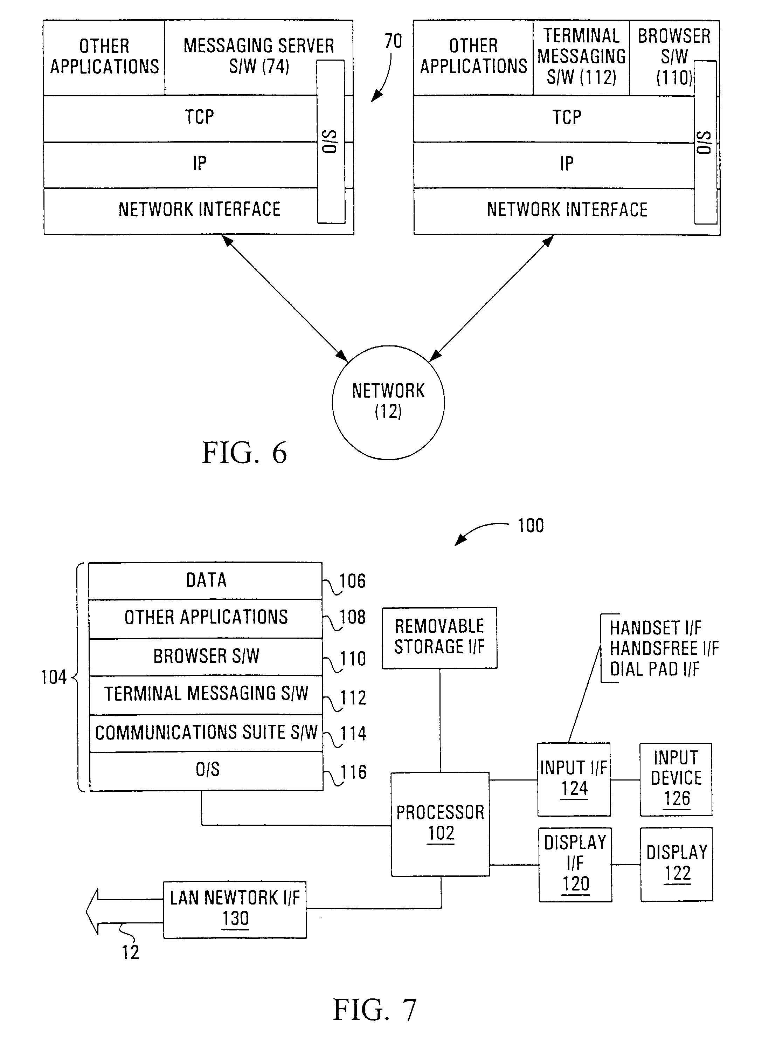

Referring to FIG. **6**, there is shown an example of the layering of communications functions in the present invention using the TCP/IP suite. As is known in the art, the Internet Protocol (IP) is a widely used connectionless routing protocol, similar to the connectionless network protocol (CNLP) specified in ISO **8473**, and serves as the foundation for routing over a variety of networks, including the Internet. Connection-oriented services can be, and often are, provided over the IP protocol using a higher layer transport protocol such as the Transmission Control Protocol (TCP). TCP is a connection-oriented, packet-switching protocol used for communications between processes in host computers and connected users. TCP maintains status and state information about each user data stream flowing into and out of the associated TCP software module. The TCP protocol also provides end-to-end data transfer across one network or multiple networks to a higher layer protocol or application at a destination resource. In the TCP/IP model in FIG. **6**, communications at the network layer between computer server **70** and network **12** are handled by the network interface which in the illustrative embodiment in FIG. **1** implements the IEEE **802.3** ethernet standard.

Referring to FIG. **5** and **6**, messaging server software **74** is an application layer entity which preferably resides on computer server **70** in memory **72** and executes on central processor **80** of computer server **70**. Messaging server software **74** comprises computer readable codes which program computer server **70** to provide voice messaging services and graphical message waiting notification services. It will be appreciated, however, that voice messaging services and graphical message waiting notification services may be provided in sets of codes within two or more interoperable software applications running on the same computer server **70** or several connected computer servers.

Messaging server software **74** directs computer server **70** to communicate with user profile database **18**, message database **20** and message notification database **22** optionally via network interface **84** connected to private LAN **85**. Databases **18, 20** and **22** may reside in one or more memory stores, preferably including at least one permanent storage device such as a hard disk drive, located on computer server **70** or on separate server computers networked in communication with computer server **70**. The messaging server software **74** uses the user profile database **18**, message database **20** and the message notification database **22** which serve as data stores for the management and provision of message and user information within graphical notification system **10.**

Also included in the graphical notification system **10** there is provided image administration software application **86** which comprises codes which may reside on and be processed by a separate computer **88** connected via a network interface **90** to the computer server **70** so as to reduce the amount of administrative load on computer server **70**. The image administration software **86** provides services for the receipt and storage of digital representations of one or more graphical images associated with subscribers of graphical notification system **10.** Preferably, image administration software 86 includes commercially available software such as Adobe Photoshop(TM) which may be used to direct computer **88** to handle the resizing of graphical images to preset sizes suitable for end-user display devices. Computer **88** is preferably capable of handling the reception of such images locally via a disk drive **87** or other local input device such as a scanner connected to a Universal Serial Bus, or from subscribers on a secured basis over network **12** (FIG. **1**) using, for instance, remote access software such as PC Anywhere(TM). Graphical images received by computer **88** may be stored in user profile database **18** or another connected database, thereby facilitating the ability of system administrators and subscribers (where suitable) to add to, delete from or otherwise modify graphical images within their user profiles.

Referring to FIG. **7**, there is shown a schematic diagram of end-user communication device 100, exemplified earlier by terminal devices **14** and **16** (see FIG. **1**). Communication device **100** includes central processor unit **102** connected to: memory **104**, display **122** (via display interface **120**), user input device **126** (via user input interface **124**), and network interface **130**. Central processor **102** performs the operations necessary to connect communications device **100** to a network via network interface **130** and is programmed by terminal messaging software **112** to receive and display graphical message notifications in the form of incoming information signals associated with stored messages on display **122**. By way of example, processor **102** can be selected from the Intel x**86** chipset, Intel Pentium(TM) series, Motorola PowerPC(TM) or G**3** series, or another suitable processor. Data, such as graphical message notifications, which are to be displayed by communications device **100** are transmitted by processor **102** to display device **122** which may be any type of display supporting the display of graphical images. Memory **104** is preferably comprised of volatile memory such as Random Access Memory (RAM), and non-volatile memory such as a hard disk drive or Read Only Memory (ROM).

As illustrated in FIG. **7**, memory **104** may contain a variety of software programs, including an operating system **116**, communications suite **114**, and terminal messaging software **112**. The operating system **116** may be selected from a variety of operating systems and preferably provides a graphical user interface (GUI) such as in Microsoft Windows **98**(TM), Windows CE(TM) or Macintosh Operating System **8**(TM). It will be appreciated, however, that operating system **116** is by no means limited to more robust operating systems. In fact, for more specifically tasked end-user communications devices, such as computerized display phones, a more simplified operating system such as pSOS, available from Integrated Systems Inc., is preferred. Communications suite **114** may include TCP/IP, Point-to-Point Protocol (PPP), or SLIP, as well as Ethernet or Token Ring software protocols for network communication via network interface **130**. It will be appreciated, however, that communications device **100** may alternatively interface with a network via a wireless LAN or other wireless data network equipment, or via a cable or Asymmetric Digital Subscriber Line (ADSL) modem or the like. For more fully featured end-user communications devices, such as with personal computers, lap-top computers, or palm-top computers, communications device **100** preferably includes browser software **110**, such as Netscape Navigator(TM), Microsoft Internet Explorer(TM), Mosaic(TM) or other commercially available browsers for connecting device **100** to the World Wide Web (WWW) and other IP based communications.

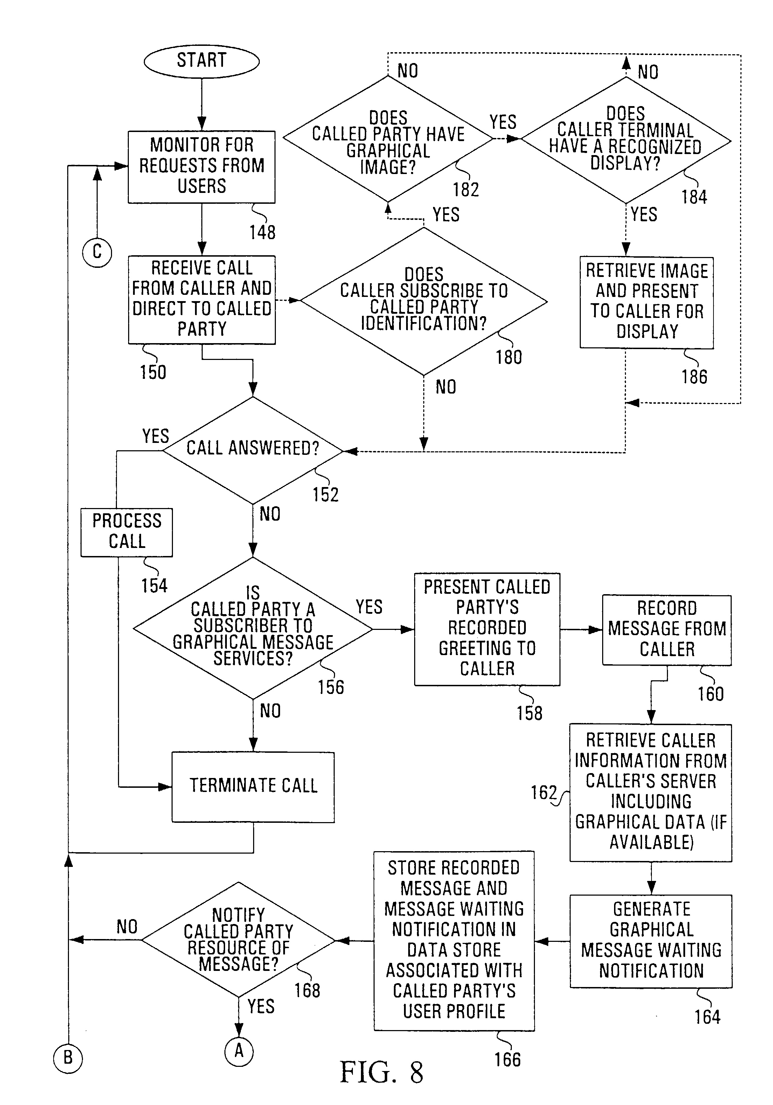

Referring to FIG. **8**, there is shown a flow diagram illustrating the notification services available with graphical notification system **10** for the embodiment in FIG. **1**. For ease of reference in the following discussion, reference is made to FIG. **1** to **8**. In operation, a call is made by a caller from source terminal **14**, to a subscribing called party at destination terminal **16**, over network **12** via graphical notification system **10**. Preferably, messaging server software **74** is executed by processor **80** and programs computer **70** to monitor for subscriber requests over a network interface to network **12** at step **148**. When a call from the caller is received by computer server **70**, the call is directed by messaging server software **74** at step **150** to the called party's destination terminal **16** using the called party's address information stored in user profile database **18**. If the call is answered at step **152** communication between the caller and called party proceeds at step **154** in the usual way available over the network until it is terminated by one of the parties. If, on the other hand, the called party does not answer the caller's call within a predetermined period of time, messaging server software **74** directs computer server **70** to query user profile database **18** at step **156** to determine if the called party is a subscriber of graphical messaging services. If computer server **70** determines that the called party is a subscriber of the messaging services of system **10**, messaging server software **74** directs computer server **70** to retrieve the called party's recorded greeting from the corresponding user profile and to transmit the greeting to the caller at step **158**, prompting the caller for a message. The caller's message is then recorded by computer server **70** at the direction of messaging server software **74** at step **160** and the caller's identification information including graphical data (if available and if the called party subscribes to the graphical service) is retrieved at step **162** from the caller's user profile in user profile database 18.

At step **164** messaging server software **74** directs computer server **70** to generate a graphical message waiting notification represented by an information signal which is associated with the recorded message from the caller and which includes a digital representation of at least one graphical image associated with the subscribing caller. In this way, messaging server software **74** directs computer server **70** to generate an information signal relating the stored message to the at least one graphical image. As a variation, if messaging server software **74** supports video or audio/video messaging, one or more frames of the recorded video or audio/video message may be reproduced within the graphical message waiting notification at the direction of messaging server software **74**. Inserting into the notification live frames of video of the calling party offers the advantage of making available to the called party graphical images associated with the actual calling party, irrespective of the subscribing line, subscribing connection or subscriber ID used by the calling party to send the recorded message.

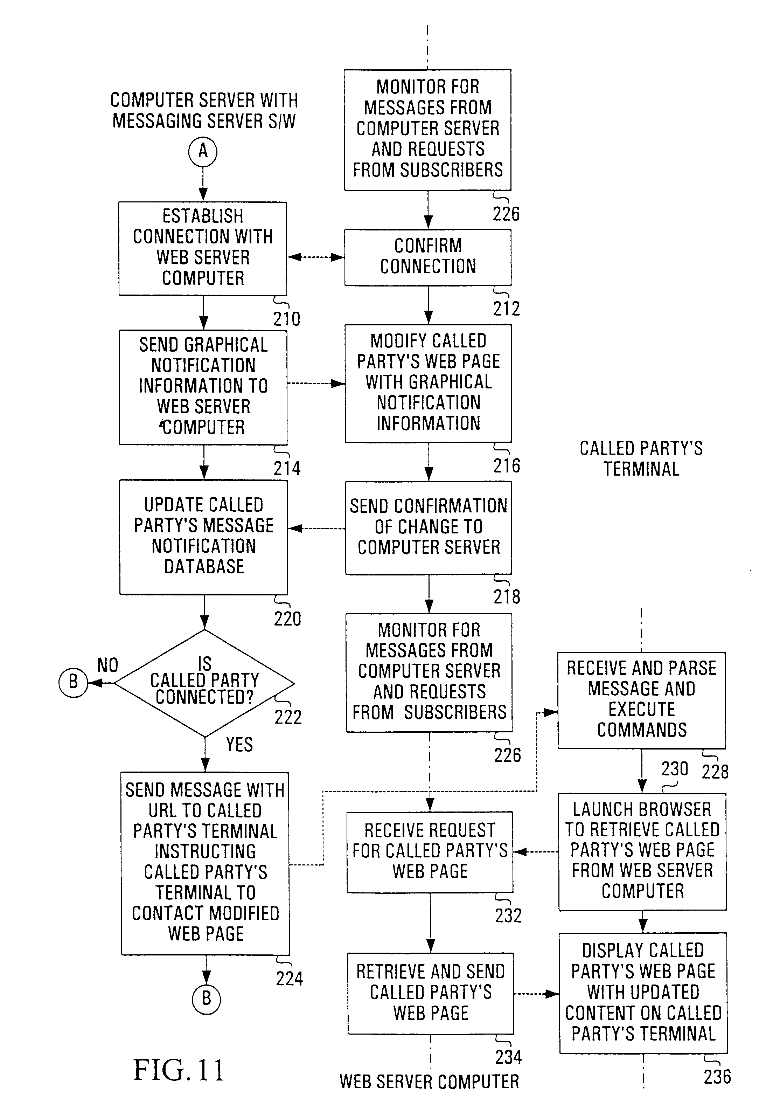

Computer server **70** stores the caller's recorded message with appended caller and call information (which in combination form the message profile) and the graphical message waiting notification at step **166** in message database **20** and graphical message notification database **22**, respectively, and modifies the called party's user profile in user profile database **18** to record a reference to the newly recorded message and notification. Preferably, subscribers connect to computer server **70** via network **12** to retrieve pending notifications. Alternatively, pending notifications may be pushed to subscribers. For instance, if, at the direction of messaging server software **74**, computer server **70** determines at step 168 that based on the called party's user profile a networked resource of the called party should be notified of the recorded message or graphical notification, computer server **70** proceeds to additional processing at step **210** (in FIG. **11**) and otherwise preferably returns to monitoring for subscriber requests over network **12** at **148**.

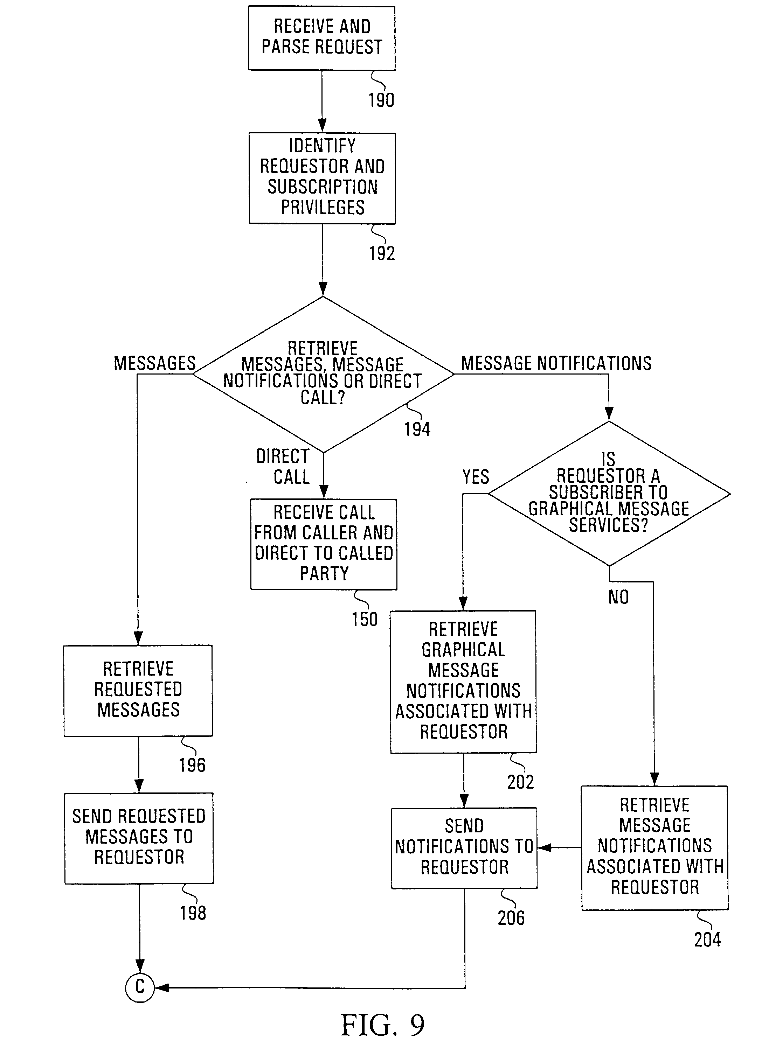

The process of monitoring for user requests at step **148** of FIG. **8** by messaging server software **74** (FIG. **5**) is decomposed into several operations in FIG. **9**. For ease of reference, the decomposition of the monitoring process is described below with reference to FIG. **1** to **9**. With TCP/IP communications, a client/server model is preferably implemented wherein a network-side server process running on computer server **70** with messaging server software **74** monitors a first port for incoming requests and data from subscribers. A network-side client process also running on computer server **70** with messaging server software **74** is used to initiate transmissions to networked subscribers over a second port. At each networked subscriber terminal, a user-side server process running on such terminal with the user-side terminal messaging software **112** monitors the second port for transmissions directed from the network-side client process via computer server **70**. A user-side client process also running with the terminal messaging software **112** initiates transmissions and subscriber requests to the messaging server software **74** over the first port being monitored by the networked-side server process.

When computer server **70** receives a request at step **190** (while monitoring at step **148**) over network **12**, messaging server software **74** directs computer **70** to parse the request. At step **192** messaging server software **74** identifies the requestor (including the requestor's terminal address) and the subscription privileges of the requestor. This latter operation includes authenticating the requestor as a recognized subscriber of graphical notification system **10** and instructing computer server **70** to query the user profile database **18** for information on the requestor's subscription services. For identified subscribers, messaging server software **74** determines at step **194** whether the request includes a request to retrieve one or more of the subscriber's recorded messages, a request to retrieve message notifications for the subscriber, or a request to connect a call. Requests to connect a call are handled by messaging server software **74** at step **150** in the manner described above (in FIG. **8**). Requests for the retrieval of recorded messages are processed at the direction of messaging server software 74 at step **196** wherein computer server **70** queries the message database **20** for the appropriate messages. Retrieved messages are sent by computer server **70** at step **198** using the TCP/IP protocol to the terminal address of the subscribing requestor. For requests identified at step **194** as requests for message notifications, computer server 70 determines at the direction of messaging server software **74** whether or not the subscriber/requestor has subscribed to the graphical message services of graphical notification system **10** at step **200**. If the requestor is a subscriber of the graphical message services, messaging server software **74** initiates at step **202** retrieval of pending graphical message notifications associated with the requestor from graphical notification database **22**. Retrieved graphical notifications are transmitted by computer server **70**, at the direction of messaging server software **74**, in the form of information signals to the terminal address of the subscribing requestor at step **206**. For a subscriber that is a subscriber of notification services but not the graphical notification service, pending non-graphical message notifications associated with the requestor are retrieved at step **204** and sent to the subscriber at step **206**.

Referring to FIG. **1** to **8**, as an additional enhancement to graphical message waiting notification system **10**, messaging server software **74** may optionally direct computer server **70** to query at step **180** (in FIG. **8**) the caller's user profile in user profile database **18** to determine if the caller subscribes to called party identification services. If the caller is a subscriber to called party identification services, then computer server **70** queries at step **182** the called party's user profile in user profile database **18** to determine if the called party has a graphical image associated with the called party. If a graphical image for the called party is found, and if computer server **70** can determine that the caller's terminal is capable of receiving such graphical information based on the caller's user profile (step **184**), messaging server software **74** can direct computer server **70** to retrieve and transmit the graphical information to the caller's terminal for display (step **186**) as the call is processed or a message recorded. In addition to providing the calling party with graphical information, textual information about the called party can be retrieved by computer server **70** at step **186** and communicated to the calling party's terminal device **14**. These enhancements offer an automated mechanism for providing a calling party with information associated with the called party which may not have been available to the calling party before the call was initiated. For example, textual information presented to the calling party may include the called party's e-mail address, postal address, title, and alternative addressable communications numbers such as telephone numbers, fax numbers or cell phone numbers.

Preferably, in the latter case, textual information and graphical information associated with the called party are presented to the calling party at step 186 in a business card-like format for display within a viewing window on terminal **14**. Such graphical and textual information associated with the called party may be saved locally on terminal **14** in a contact list database or as separates files in a directory for subsequent easy retrieval and use by the calling party. For instance, such locally saved graphical and textual information may be subsequently retrieved on terminal **14** for use in an autodialer coded to program terminal **14** to call the party associated with the retrieved information. Similarly, calling party information, including graphical information and textual information, associated with a caller line or a subscriber ID may be communicated to the called party in a pre-defined business card-like format at the time of a call. If the call is not answered, such calling party subscriber information may be passed to the called party's network messaging server (such as computer server **70**) for storage in association with a stored message from the calling party and for generation by computer server **70** of a graphical message waiting notification associated with the stored message.

In the event the call is not answered but the destination terminal **16** is nevertheless active, messaging server software **74** may direct computer server **70** to transmit an alert to TCP/IP server software running on the called party's terminal **16** so as to notify terminal **16** that the call has been transferred to computer server **70** for invocation of the recording services at step **156** (in FIG. **8**). In response to terminal **16** receiving the alert, terminal messaging software **112** (FIG. **7**) preferably directs terminal **16** to display a graphical button or other interactive graphical mechanism in a view screen which, when selected, initiates transmission by terminal **16** of a message to computer server **70** instructing computer server **70** to interrupt the recording of the calling party's message and to transfer the calling party's call to the called party's terminal **16** or telephone or the like so that the call may proceed. This feature provides a called party may with the ability to interactively establish a call or communication with the calling party even after the calling party has been redirected to the recording services of computer server **70**.

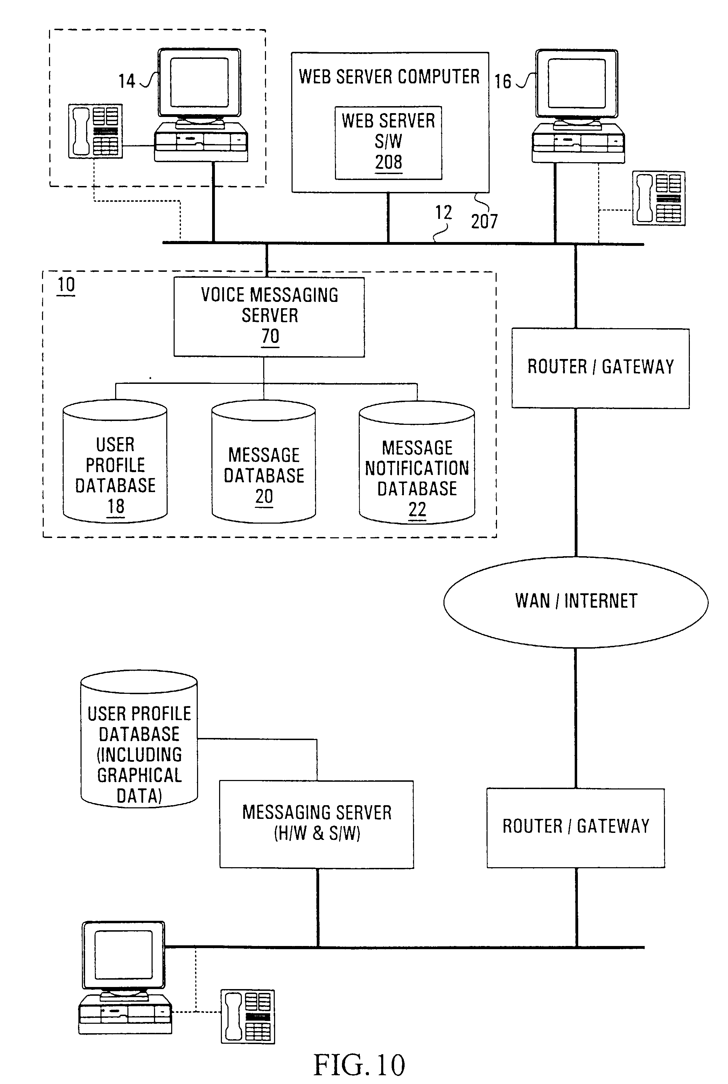

In a variation of the architecture of the embodiment of the invention shown in FIG. **1**, web-based graphical notification services may be provided using a web server such as web server software **208** which, as illustrated in FIG. **10**, may reside on a networked computer server such as web server computer **207** which is connected to network **12** and which is interoperable with computer server **70** and network subscriber terminals via a common communications protocol such as the TCP/IP suite. Preferably, web server computer **207** is configured to support protocols such as the well known Hypertext Transport Protocol (HTTP), the File Transfer Protocol (FTP) and gopher. Web server computer **207** includes a central processor connected to memory having at least one permanent storage device. Web server software **208** resides within the memory of web server computer **207** and directs web server computer **207** to receive, store, retrieve and transmit web pages and other files, and to receive and process user and host requests over network **12**. Commercially available web server software include Apache's web server software and Microsoft Internet Information Server. Advantageously, web server software **208** can be configured to serve as a secure web-based message notification server operative to store web pages associated with subscribers of graphical notification system **10.** In such an embodiment, the stored subscriber-related web pages may be used by computer server **70** under the direction of messaging server software **74** as notification web pages to record graphical notifications for subsequent retrieval and viewing by associated subscribers. Graphical notifications associated with stored messages may thus be embedded into a subscriber's notification web page stored on web server computer **207**. Advantageously, a notification web page may be retrieved from within network **12** or externally, for instance via the Internet. Such embedded graphical notifications can include a full-size or reduced-size (eg. a thumb-nail image) graphical image associated with the caller and caller information such as the caller's name and network address or phone number.

In one variation, hyperlinks may be associated with each embedded graphical notification so that when such graphical notification is selected, an associated hyperlink initiates an HTTP message or other type of message (eg. FTP or gopher) from the subscriber's terminal directed to computer server **70** and requesting the delivery of the recorded message associated with the embedded graphical notification. Alternatively, recorded messages may reside on the web server computer **207** and a subscriber selected hyperlink message may send an HTTP message to the web server computer **207** requesting transmission of the selected recorded message to the IP address of the subscriber's terminal.

Referring to FIG. **11**, there is shown in operation an illustrative embodiment of the web notification architecture described above with respect to FIG. **10.** The operations of three network entities are shown in FIG. **11**: (a) operations by computer server 70 with the direction of messaging server software **74**, (b) operations carried out by web server computer **207**, and (c) operations carried out locally at a called party's terminal communications device. Referring to FIG. **8, 10** and **11**, it will be recalled that when recording a message from a caller, messaging server software **74** may optionally determine at step **168** if the called party user profile stored in user profile database **18** identifies any called party resource registered to receive notification of the recorded message or pending notification. In the web-based addition above, the called party's user profile may include a field identifying web server computer **207** or a similar web-based resource which may be registered to receive notification information (including graphical information associated with the caller if available). In the case where the user profile indicates that web server computer **207** is a registered resource, messaging server software **74** directs computer server **70** to retrieve from the called party's user profile in user profile database **18** the location of a pre-selected web page on web server computer **207** associated with the called party and optionally the IP address of web server computer **207**. Alternatively, the IP address of web server computer **207** can be a single, standardized location preprogrammed into computer server **70**.

Once the requisite web page information is retrieved from the called party user profile, messaging server software **74** directs computer server **70** to establish a connection with web server computer **207** at step **210**. If computer server **70** is programmed for telephony messaging services, such as a voice messaging computer operating at a central office or PBX equipment, then computer server **70** communicates with a telephone switch via a telephony programming interface protocol such as Microsoft's Telephony API (TAPI) so as to control telephone sessions. As an alternative telephony interface, one may use Novell and AT&T's Telephony Services API (TSAPI) which is designed to enable a telephone PBX with a Netware(TM) server to provide interoperability between personal computers and telephone equipment. In such telephony environments, the telephone switch may be a PBX or Central Office for network configurations that use a telephone network to carry voice signals, or a gatekeeper or the like for configurations that use a Voice over IP protocol (such as specified in the H.**323** Specification) to carry voice signals over data networks.

In operation, web server computer **207** may monitor its network interface with network **12** periodically at step **226** for messages from computer **70** and from subscriber terminals. When a network connection request from computer server **70** is received by web server computer **207**, the network request is verified and a confirmation may be transmitted back to computer server **70** (step **212**). Messaging server software **74** directs computer server **70** to send the new graphical notification information at step **214** encapsulated in a network message to web server computer **207** so as to add the graphical notification information to a web page associated with the called party (**216**). By way of example, computer server **70** may send an HTTP message containing the IP address associated with the web server computer **207**, the name of a server-side common gateway interface (CGI) script residing on web server computer **207** and data and command parameters for configuring the server-side CGI script.

At step **216**, web server software **208** directs web computer server **207** to parse received network messages from computer server **70** and proceeds to modify the called party's web page accordingly to include the new notification information. In the above HTTP messaging example, the server-side CGI script is executed by web server computer **207** so as to create or modify an HTML document and to populate the HTML document with the new notification information. Preferably, the server-side CGI script initiates a confirmation of the successful update which may then be sent by web server computer **207** to computer server **70** at step **218.** When computer server **70** receives the confirmation, it proceeds to update at step **220** the called party's message notification records on database **22** to reflect the successful web-site update.

Optionally, other called party related records may be modified at step **220** such as the called party's user profile located in database **18**. Following modification of the called party's web page with the graphical notification, computer server **70** may poll at step **222** one or more registered called party end-user terminal devices to determine if the called party is connected. This latter operation offers the advantage of both pushing the updated web page graphical content to the called party's web site server and pushing another preferably brief notification directly to a networked end-user terminal to initiate retrieval by the active terminal of the modified web page from web server computer **207**. For instance, at step **224**, computer server **70** may send to the active end-user terminal a signal representing an ASCII string providing a Uniform Resource Locator (URL) to the called party's updated web page on web server computer **207**. This string may be encapsulated within an HTTP message instructing the called party's active terminal to access the web server computer **207** and the string itself may contain, as an access scheme to the called party's web page, another HTTP message making up part of the aforementioned URL. Of course, other access schemes may be implemented, including, for example, FTP and gopher.

In the event an active end-user terminal associated with a called party receives a TCP/IP message from computer server **70**, the message is parsed by the terminal message software residing on the active terminal at step **228** and the parsed instructions are executed. Preferably, the instructions parsed from the message include an instruction for the active terminal to launch a web browser application residing on the active terminal. The web browser could be launched at step **230** with the received URL identifying the access scheme and location of the updated web page for the called party. In this way, the web browser will automatically initiate a connection with web server computer **207** and retrieve the called party's notification web page. As a variation, only an indication that the called party's message waiting notification web page has been updated need be sent to the active terminal, wherein the appropriate URL is then sent by the active terminal's browser to the web server to fetch the updated web page. This latter variation provides a simplified solution, although it will be recognized that such a solution would require the called party's active terminal to access a predetermined web page located at the web server's IP address and known to the active terminal. Providing the entire URL enables the active terminal to dynamically locate any web page sent to the terminal, rather than only a web page associated with the web server IP address and known to the called party's active terminal in advance.

When the web server computer **207** receives the request for the called party's updated web page at step **232**, web server software **208** directs web server computer **207** to check to see if the requested web page exists. If the requested web page exists, web server computer **207** retrieves the requested web page and transmits the web page to the requesting terminal of the called party at step **234** wherein upon receipt of the web page at step **236**, the web browser displays the requested web page on the active terminal's display device. As previously indicated, once the updated web page is displayed on the active terminal, the called party may review the web page for new or saved graphical notifications, and may easily select a hyperlink object associated with one or more graphical notifications on the web page to initiate retrieval of the full recorded message associated with the graphical notification(s). Such a retrieval request for a stored message would preferably be directed to computer server **70** either via the web server computer **207** or from the active terminal's browser directly by encoding a hyperlink within the associated web page appropriately.

While the above web-based embodiment provides a preferred embodiment, it will be appreciated that other enhancements and variations to a web-based architecture are also contemplated within the present invention. For instance, rather than pushing brief notifications from computer server **70** to an active terminal of the called party at step **224**, such a brief notification may be sent from the web server computer **207** instead. Alternatively, a called party's active terminal may have its terminal messaging software **112** programmed to monitor for updates directly, or via a terminal browser, one or more pre-selected web pages associated with or owned by the called party. In this latter variation, updates to a called party's web page would be identified by the monitoring active terminal which could then initiate the retrieval of the updated web page(s) from the web server computer **207** directly or via a browser.

In another variation, a simplified web-based solution may be implemented wherein an intermediary web server computer is used as a file server for storing subscriber information graphically identifying a subscriber and including contact information in respect of the subscriber. In this simplified case, a system administrator may be responsible for setting up web pages on web server computer **207** for each user. Such user web pages may be set up using a business card-like format with an HTML template which may be accomplished with commercially available software such as Microsoft's FrontPage(TM). Preferably, such user web pages would specify unique graphics information and other user information indicative of associated subscribers. In this way, a subscriber may maintain a variety of business card-like files providing data about the subscriber. At least a portion of each subscriber's user profile information may be located on the web server computer **207** within associated user web pages. For larger implementations, web server computer **207** could be accessed as a network drive by computer server **70**. Preferably, computer server **70** would be responsible for creating sub-directories for each user in a predetermined directory within a storage device within web server computer **70**. Each sub-directory may be labelled to correspond to a particular user of the graphical notification system **10**. These sub-directories may be used to arrange web pages according to subscriber in a flat file format.

Alternatively, other directory structures may be used to manage the user-related web pages. For instance, one directory may be used wherein web documents such as HTML files are labelled according to associated users. Alternatively, another document description language may be used in place of HTML such as other derivatives of the Standard Generalized Markup Language (SGML), such as the Extensible Markup Language (XML). In another variation, a database structure may be used.

In the illustrative LAN architecture of FIG. **1** wherein both caller and called party are subscribers to the same graphical message notification system **10**, retrieving the caller's identification information involves messaging server software **74** directing computer server **70** to access locally available records. It will be appreciated, however, that the present invention is not limited in its application to an environment wherein caller and called party are connected to the same local network or wherein caller and called party are subscribers to the messaging services of the same computer server **70**. As illustrated in the embodiment in FIG. **10**, a caller and called party may be located remote from each other on separate but interconnected networks which may be interposed by one or more other network infrastructures such as a WAN, PSTN network or the Internet. Furthermore, a caller and called party may be subscribers to separate but compatible messaging systems which can exchange recorded messages and caller identification information and which preferably both support graphical notification services. It will be appreciated that in order to leverage existing technologies, it is preferred that the graphical notification system of the present invention provide down-ward compatible services to support existing messaging services even when either of the caller or called party's messaging domain does not support graphical notifications. Such down-ward compatible support facilitates the convergence of messaging systems with the graphical message notification service of the invention.

In another variation, the call processing architecture may be separate from the messaging platform represented by graphical message notification system **10**. For instance, messaging server software **74** may be deployed as an adjunct to a voice messaging server, rather than being integrated with the voice messaging server. In this latter case, a centralized identification database containing graphical information associated with users of graphical message notification system **10** may be connected to network **12**. As messages are recorded by the voice messaging server, graphical message notification system **10** may record a reference to the recorded messages in appropriate user profiles within the centralized identification database. Terminal messaging software **112** on a user terminal periodically polls a messaging server, such as messaging server software **74** running on computer server **70**, in search of new, unreviewed messages for a user. When such a message is detected, a reference to the message is added to a list of waiting messages. Terminal messaging software **112** then directs the terminal upon which software **112** resides to request graphical information associated with the source of the stored message from the centralized identification database. If such graphical information is found, it is used by messaging server software **74** to create a graphical message waiting notification for presentation via terminal messaging software **112** to the user to whom the message is addressed. Such a notification may be presented to the user as a business card with identification information pertaining to the source as well as information pertaining to the waiting message, such as the date and time the message was recorded. If the waiting message originated from a source that is not registered in the centralized identification database, a default graphic that denotes a call from an external source could be presented by messaging server software **74** to the user terminal for display along with textual identification information pertaining to the source and summary details regarding the stored message. The graphical message waiting notifications for such stored messages would be displayed on the user's terminal in, for example, a window of a graphical user interface or alternatively in a screen saver format for a dormant terminal.

Referring to FIG. **12**, in another aspect of the invention, graphical information associated with a source or addressee of a communication is provided over a data network to the other party to the communication. In this aspect of the invention, graphical information associated with the source of the communication is provided to an addressee's end-user communications device via a web server or other network resource when a communication from a source is directed to the addressee's end-user communications device. Graphical information associated with the addressee may also be provided to the source of the communication.

In the illustrative embodiment in FIG. **12**, the graphical caller identification system includes a caller web server **250** interconnected, directly or indirectly, to a called party web server **256**, a messaging system **265** interconnected with called party web server **256**, and end-user communications terminals **14** and **16** each having display devices. Web servers **250** and **256** may be similar in arrangement to web server computer **207** (in FIG. **10**), may be web server software residing respectively on the caller and called party's communications devices, or may be web server software residing on respective computer servers within, or connected to, corresponding central offices or gatekeepers.

Messaging system **265** may be arranged similar to graphical notification system **10** (see FIG. **1** and **5**) so as to provide both messaging services and graphical notification services and, in addition, so as to provide graphical caller identification services. Alternatively, messaging system **265** can comprise a graphical call identification server operative to support graphical identification services and separately connected to a messaging server, such as a voice messaging server, capable of providing message recording services. In whichever variation is deployed, messaging system **265** preferably provides both graphical caller and called party identification.

Referring to FIG. **12** to **15**, a caller located at terminal **14** initiates a call to a called party via a network connection **280** using the voice over IP (VoIP) protocol defined by the International Telecommunications Union (ITU) H.**323** specification. It will be appreciated by persons skilled in the art that H.**323** is an umbrella recommendation from the ITU which provides a foundation for multimedia communications including audio, video and data communications across IP based networks such as local area networks and the Internet. H.**323** includes a number of standardized protocols for handling call set up, call control, media control, and real-time data exchange.

The call (or call request) initiated from terminal **14** includes the IP address of the called party's service provider **268** which for illustration is a gatekeeper **268**. The call request is routed at step **300** through network **274** and local area network **278** to gatekeeper **268** which looks up the IP address of the caller's web server **250** in lookup table **266** and retrieves caller identification such as the caller's name and phone number at step **302**. It will be appreciated that in the embodiment shown, both the caller and the called party are subscribers to the same service provided by gatekeeper **268**. In this case, user profiles for both the caller and called party, and IP addresses for their respective web servers and terminals, are stored locally within memory in gatekeeper **268**.

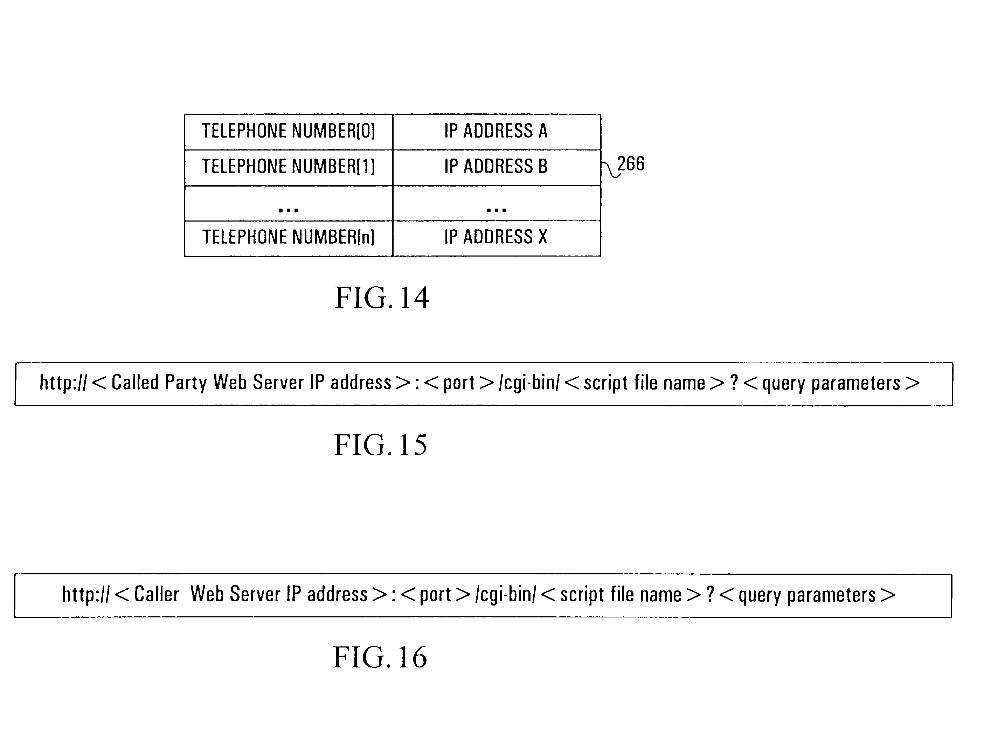

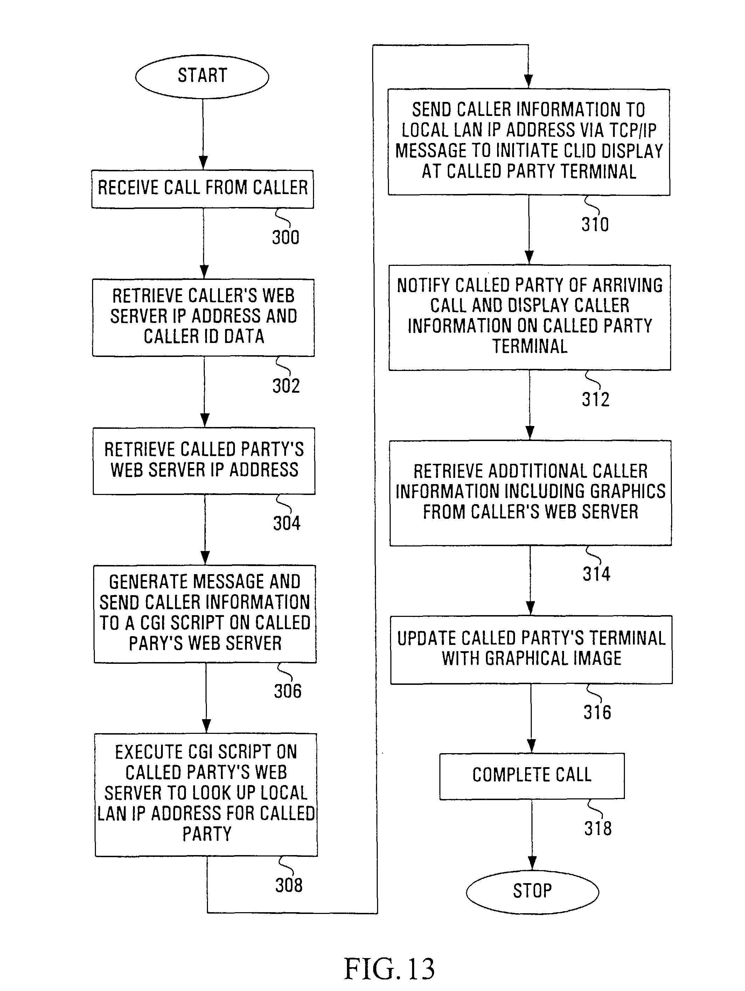

At step **304**, gatekeeper **268** retrieves the IP address of the called party's web server **256** from either a lookup table or from the called party's user profile within user profile database **264**. Messaging server **262** is programmed to encode the called party's web server IP address, the caller's web server IP address, and the caller information into a web message such as an HTTP message which server **262** generates at step **306**. It will be appreciated, upon reading this specification, that the messaging server **262** may include, more generally, a computer server operable to communicate with a plurality of networked user terminals or devices. Preferably, the HTTP message is generated as illustrated in FIG. **15**, and includes instructions initiating operations by the called party's web server **256**. For instance, in the preferred embodiment in FIG. **12**, the HTTP message includes the location of a common gateway interface (CGI) script residing on the called party's web server, with the caller information and the caller's web server IP address serving as query parameters for use by the CGI script when it is executed.

Once the HTTP message is generated, gatekeeper **268** sends the HTTP message to the called party's web server **256** where the message is executed, launching the called party's CGI script at step **308**. The called party's CGI script includes codes instructing the called party's web server **256** to look up the local LAN IP address for the called party's terminal **16** via a local database. As a variation, the called party's web server **256** may be located on the called party's terminal **16**, in which case the called party's web server **256** would preferably be accessed via the same IP address as the called party's terminal. Advantageously, for systems in which all terminals are provisioned with their own web server, the gatekeeper can look up the IP address of the called party's terminal and bypass the step of looking up the called party's web server IP address.

At step **310,** the called party's CGI script instructs the called party's web server **256** to send, using TCP/IP, the caller information received from the HTTP message to the IP address of terminal **16**. Preferably, when terminal **16** is notified of an arriving call at step **312**, messaging software residing on terminal **16** displays the received caller information while retrieval of the caller's graphical information is processed. Retrieval of the additional caller information, including graphical information associated with the caller, is initiated at step **314** wherein the TCP/IP message from step **310** instructs the terminal messaging software or a web browser residing on terminal **16** to send an HTTP message or other firewall friendly message (such as FTP, gopher or the like) to the caller's web server **250** so as to initiate a CGI script **252** on web server **250**. In a fashion similar to CGI script **258**, upon receipt by the caller's web server **250** of the HTTP message from terminal **16**, CGI script **252** is executed with parameters from the received HTTP message wherein the parameters identify requested caller information such as graphical image data **254**. The requested caller information, including graphical image data **254**, is retrieved by web server **250** under the handling of CGI script **252** at step **314** and transmitted back to terminal **16** as an HTTP message where it is parsed and the graphical image data associated with the caller is presented to terminal **16** for display on the associated display device. Thereafter, the call between caller and called party proceeds to completion with the called party having available on terminal **16** both caller line identification information and a digital representation of at least one graphical image associated with the caller.

In the latter embodiment, graphical information and other information associated with the caller is retrieved and presented to the called party. As in the aforementioned embodiment shown in FIG. **8** for graphical message waiting notification, however, graphical information and other subscriber information pertaining to the called party may be retrieved and presented to the caller at the time the caller initiates a call. Such called party information may be in a business card-like format and stored as web pages or documents as previously discussed above.

By way of example, in FIG. **12** and **13**, a caller initiating a call at step **300** may be a subscriber to such a service, in which case messaging server **262** may automatically initiate retrieval of the called party's graphical information from the appropriate networked resource upon receiving the call request from the caller. Preferably, once the called party's web server IP address is identified in step **304**, an HTTP message may be sent to the called party's web server initiating a CGI script coded to direct the called party's web server to present to the caller's web server the appropriate graphical information associated with the called party.

As another variation, a call to the called party terminal **14** may be paused temporarily at gatekeeper **268** which initiates retrieval of the graphical image data associated with the caller in the aforementioned manner with the transmission of an HTTP transmission to CGI script **258.** Once the caller graphical image data is delivered to terminal **16**, the call setup may be allowed to proceed by gatekeeper **268** upon receipt by gatekeeper **268** of instructions to proceed from terminal **16**. Advantageously, this embodiment offers a called party with visual call screening. In this variation, preferably the call times out in the event gatekeeper **268** does not receive instructions to terminate or process the call within a predetermined period of time.

In one variation, a subscriber terminal may include an interactive graphical activation software mechanism for directing the terminal to instruct the messaging server **262** to activate or deactivate graphical identification of the associated subscriber. Advantageously, this activation/deactivation feature has application both for calls as well as message recording. When deactivating graphical identification, the subscriber's terminal can be programmed to instruct messaging server **262** to deactivate the subscriber's graphical ID feature for a particular communication, for a particular recipient or until the messaging server **262** receives an activation signal from the subscriber's terminal.

In another variation of the embodiment shown in FIG. **12**, messaging server **262** may provide a subscriber with the ability to pre-select particular graphical images for presentation to another subscriber during a communication depending upon the purpose or recipient of the communication. For instance, a subscriber may, via the subscriber's terminal device, pre-select a graphical picture of a monogrammed golf ball for communications with other subscribers about golf. Alternatively, a subscriber may pre-select another graphical picture to present during communications with specific other subscribers, such as family members or business colleagues. The selection of a graphical image may be performed by the subscriber's terminal explicitly with each communication, or may be set by default for all communications or for specific classes of communications or subscribers. For instance, a subscriber's terminal may include selection software which directs the subscriber's terminal, in response to user input, to reference graphical images associated with the subscriber to particular recipients stored in the subscriber's personal directory located on the terminal or on an accessible network resource. It will be appreciated, as with other variations herein, that the ability to pre-select or pre-assign subscriber-related graphical images for presentation in a communication also has application in graphical message waiting notification. Furthermore, as is the case with the calling party, the called party may also choose the particular graphical image to be presented to incoming callers either by default (for instance, for callers whom are not pre-assigned for presentation a graphical image associated with the called party), or by specific pre-association of called party graphical images with known callers stored in data files in the called party's personal directory.

In order to reduce delays in transactions, proxy servers **270** and **272** may be provided as network resources so as to each cache web page information concerning the called party web server **256** and the caller's web server **250**, respectively. Moreover, lookup table information may be cached locally within a called party's messaging domain such as at the called party's messaging server or the called party's web server and may be flushed periodically or if the cached lookup table information generates erroneous IP addresses or phone numbers (as the case may be). Furthermore, in Intranet and similar networks, call transactions may be performed via a single web server over the network which acts as the web server for both callers and called parties. Providing for a single web server eliminates the multiple network transactions which would otherwise be necessary between web servers as illustrated the description with respect to FIG. **12** above.

In yet another variation, preferably the CGI scripts residing on caller and called party web servers adhere to a standardized naming convention for ease of implementation. In another variation, rather than handling communication between called party's terminal **16** and caller's web server **250** using HTTP, communication is handled according to FTP or the like and requested caller information including graphical information from caller's web server **250** is delivered to terminal 16 as data files which are stored in RAM or permanent storage in terminal **16**.

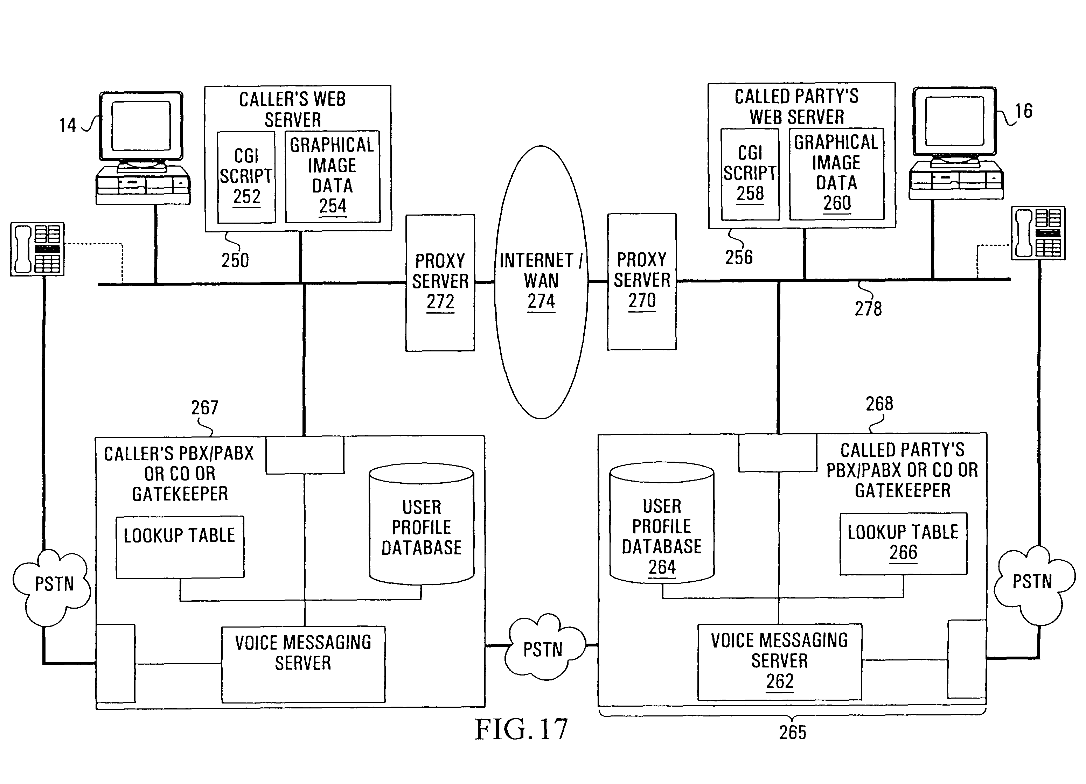

Referring to FIG. **17**, there is shown another illustrative network architecture for use with the graphical caller identification system shown in FIG. **12**. In FIG. **17**, caller and called party are subscribers to separate messaging domains interconnected directly or via networks or subnetworks. In this case, a caller initiates a call from a PSTN connected telephone or from a networked phone or computer connected to the caller's central office **267**. The initiated call is received by the caller's central office or PBX wherein the switching equipment thereof looks up the IP address of the called party's web server **256** as well as the IP address of the caller's web server **250**. Preferably, the central office or PBX includes a computer server operative to generate an HTTP message addressed to the called party's web server **256** and including a call to CGI script **258** with parameters passing to the CGI script the IP address of the caller's web server **250** and caller information such as caller line ID information retrieved by the caller's local central office or PBX. The HTTP message is sent by the central office or PBX to the called party's web server **256** wherein the CGI script **258** referenced in the HTTP message is executed with the passed-in parameters included in the HTTP message. Processing then proceeds as described above with reference to FIG. **12.** In another alternative, the caller's call may be passed over a PSTN network by the caller's local central office or PBX to the called party's central office or PBX. In this latter case, the called party's central office or PBX switching equipment looks up the IP address of the calling party's web server **256** and sends the HTTP message to web server **256.**

In another variation, the web server architectures described above in respect of FIG. **12** to **17** may also be implemented in the context of graphical message waiting notification described in respect of FIG. **1** to **11**. Advantageously, the same message handling techniques may be used with the same or similar CGI scripts. If, for instance, a call directed to terminal **16** in FIG. **12** does not connect, CGI script **258** directs the called party's web server **256** to pass a message to the messaging server **262** containing the URL of the caller's web server **250** and the caller ID. Upon receiving the message from web server **256**, messaging server **262** requests from the caller's web server **250** the graphical and textual information associated with the caller if such information is not already available. Graphical and textual information associated with the caller and received from the caller's web server **250** is stored as a graphical notification in the called party directory on a web server local to network 278. Preferably, such graphical notifications are stored with unique names so that the name of a graphical notification may be used to correlate the graphical notification with the appropriate stored message. Stored messages are preferably stored on a storage device connected to messaging server **262** for retrieval by the called party's terminal **16**. Terminal **16** may retrieve pending graphical notifications from the called party directory on the local web server (eg. called party web server **256**) and requests for stored messages may be initiated using the CGI script of such a web server to initiate retrieval of selected messages from the message server **262.**

In yet another variation, graphical message notification and graphical source and addressee identification services may be used with the Analog Display Services Interface (ADSI) protocol. For instance, an ADSI server may be connected to a central office associated with a voice messaging server. At the direction of the voice messaging server, the ADSI server may instruct the central office to send a message to the residential ADSI phone containing message waiting notification information including graphical information associated with the source of an incoming message. The called party's ADSI phone receives the graphical notification associated with the source of the incoming message and displays the information on a built-in display screen.

Although this invention has been described with reference to illustrative embodiments which are merely illustrative of a preferred embodiment of carrying out the invention, this description is not intended to be construed in a limiting sense. Various modifications of form, arrangement of parts, steps, details and order of operation of the illustrative embodiments, as well as other embodiments of the invention, will be apparent to persons skilled in the art upon reference to this description. For instance, the functionality provided by CGI scripts in the proceeding examples may also be provided by other mechanisms, such as Java Servlets, Server Side Includes (SSI) and other types of programs that can be invoked via command from a network. It is therefore contemplated that the appended claims will cover such modifications and embodiments as fall within the true scope of the invention.

## Claims

1. A method of acquiring a graphical image associated with a source of a communication, the method comprising:
identifying (a) a source party network resource associated with the source of the communication where at least one graphical image associated with the source can be retrieved, and (b) a destination party network resource associated with a destination of the communication; and
causing said source party network resource to transmit the at least one graphical image via a data network to the destination party network resource for presentation of the at least one graphical image to a communications device associated with the destination.

2. A method according to claim **1**, wherein said causing step includes:-
(i) the following steps:
(a) generating an instruction signal including an instruction sequence executable by the destination party network resource for initiating retrieval of the at least one graphical image from the source party network resource; and
(b) transmitting the instruction signal to the destination party network resource; or
(ii) the following steps:-
(a) generating a control signal for identifying a location of the source party network resource for the destination party network resource; and
(b) transmitting the control signal to the destination party network resource so as to initiate retrieval by the destination party network resource of the at least one graphical image from the source party network resource.

3. A method according to claim **1**, including receiving an incoming signal identifying the source of the communication and the destination of the communication; and wherein the identification of said source party network resource occurs in response to the incoming signal.

4. A method according to claim **1**, including receiving an incoming signal indicative of the communication and determining the source and the destination of the communication in response to the incoming signal.

5. A method according to claim **4**, wherein said receiving step includes receiving an incoming signal indicative of at least one of: a call and the source.

6. A method according to claim **1**, including retrieving call information relating to the source and sending the call information to the destination party network resource for display by the communications device.

7. A method according to claim **1**, wherein graphical information associated with the destination is transmitted from the destination party network resource to the source party network resource for presentation to the source.

8. A method according to claim **1**, including determining a network address of the communications device associated with the destination and transmitting the at least one graphical image from the destination party network resource to the network address of the communications device for presentation of the at least one graphical image at the destination in association with the communication.

9. A method according to claim **1**, wherein said causing step includes initiating transmission of the at least one graphical image from the source party network resource to the destination party network resource.

10. A method according to claim **1**, wherein said causing step includes initiating transmission of the at least one graphical image to the destination party network resource for presentation at the communications device before the communication is connected.

11. A method according to claim **1**, including identifying a media type associated with the communication, and causing a graphical representation associated with the media type to be transmitted to the communications device.

12. A method according to claim **11**, including requesting data identifying the media type of the communication from a network device associated with the source.

13. A method according to claim **1**, including causing a digital representation of a sound waveform associated with the source to be transmitted to the communications device.

14. A method according to claim **1**, wherein said causing step includes initiating transmission of the at least one graphical image to the destination party network resource for presentation at the communications device as the communication is connected.

15. A method according to claim **1**, wherein said causing step includes initiating transmission of the at least one graphical image to the destination party network resource for presentation at the communications device within a predetermined period of time after the communication is connected.

16. A method according to claim **1**, including making the communication between the source and the destination.

17. A method according to claim **1**, including relating the communication to a pre-selected graphical image associated with the source and pre-selected by the source.

18. A method according to claim **1**, including relating the communication to a pre-selected graphical image associated with the addressee and pre-selected by the addressee.

19. A method according to claim **1**, including storing the at least one graphical image associated with the source locally at one of: the destination party resource and the communications device associated with the destination.

20. A method according to claim **1**, including identifying at least one destination party graphical image associated with the destination and causing the at least one destination party graphical image to be transmitted from said destination party network resource to said source party network resource for presentation on a communications device associated with the source.

21. A method according to claim **20** including storing the at least one destination party graphical image associated locally at one of: the source party network resource and the communications device associated with the source.

22. A computer readable medium including codes for:
directing at least one network computer to identify: (a) a source party network resource associated with the source of the communication where at least one graphical image associated with the source can be retrieved; and (b) a destination party network resource associated with a destination of the communication; and
directing the at least one network computer to cause said source party network resource to transmit the at least one graphical image via a data network to the destination party network resource for presentation of the at least one graphical image to a communications device associated with the destination.

23. A computer readable medium according to claim **22** wherein:-
(a) said codes include codes for directing the at least one network computer to:
generate an instruction signal including an instruction sequence executable by the destination party network resource for initiating retrieval of the at least one graphical image from the source party network resource; and
transmit the instruction signal to the destination party network resource; and/or wherein
(b) said codes include codes for directing the at least one network computer to:
generate a control signal for identifying a location of the source party network resource for the destination party network resource; and
transmit the control signal to the destination party network resource so as to initiate retrieval by the destination party network resource of the at least one graphical image from the source party network resource; and/or wherein
(c) said medium includes codes for directing the at least one network computer to: (i) receive an incoming signal indicative of the communication and (ii) determine the source and the destination of the communication in response to the incoming signal; and/or wherein
(d) said medium includes codes for directing the at least one network computer to: (i) identify a media type associated with the communication, and (ii) cause a graphical representation associated with the media type to be transmitted to the communications device and/or wherein
(e) said medium includes codes for directing the at least one network computer to cause a digital representation of a sound waveform associated with the source to be transmitted to the communications device; and/or wherein
(f) said codes include codes include codes for directing the at least one network computer to initiate transmission of the at least one graphical image to the destination party network resource for presentation at the communications device as the communication is connected; and/or wherein
(g) said medium includes codes for directing the at least one network computer to relate the communication to a pre-selected graphical image associated with the source and pre-selected by the source; and/or wherein
(h) said medium includes codes for directing the at least one network computer to relate the communication to a pre-selected graphical image associated with an addressee of the communication and pre-selected by the addressee; and/or wherein
(i) said codes include codes include codes for causing the at least one graphical image associated with the source to be presented to the communications device before the communication is connected; and/or wherein
(j) said medium includes codes for directing the at least one network computer to (i) identify at least one destination party graphical image associated with the destination and (ii) cause the at least one destination party graphical image to be transmitted from said destination party network resource to said source party network resource for presentation on a communications device associated with the source.

24. A method of acquiring a graphical image associated with an addressee of a communication, the method comprising:
identifying (a) a destination party network resource associated with the addressee of the communication where at least one graphical image associated with the source can be retrieved, and (b) a source party network resource associated with the source of the communication; and
causing said destination party network resource to transmit the at least one graphical image via a data network to the source party network resource for presentation of the at least one graphical image to a communications device associated with the source.

25. An apparatus for acquiring a graphical image associated with a source of a communication, comprising:
means for identifying (a) a source party network resource associated with the source of the communication where at least one graphical image associated with the source can be retrieved, and (b) a destination party network resource associated with a destination of the communication; and
means for causing said source party network resource to transmit the at least one graphical image via a data network to the destination party network resource for presentation of the at least one graphical image to a communications device associated with the destination.

26. An apparatus for acquiring a graphical image associated with a source of a communication, comprising:
(a) a computer server operable to communicate with a plurality of networked user terminals; and
(b) memory coupled to said computer server and including computer codes for directing said computer server to:
identify (i) a source party network resource associated with the source of the communication where at least one graphical image associated with the source can be retrieved, and (ii) a destination party network resource associated with a destination of the communication; and
cause said source party network resource to transmit the at least one graphical image via a data network to the destination party network resource for presentation of the at least one graphical image to a communications device associated with the destination.

27. A system including the apparatus in claim **26**, further comprising a database, internetworked with said computer server, for storing graphical information associated with subscribers of a communications system for presentation in conjunction with the communication to at least one of: the source and the destination.

28. A system for acquiring a graphical image associated with a source of a communication, comprising:
(a) a source party network resource associated with the source of the communication, said source party network resource having at least one graphical image associated with the source;
(b) a destination party network resource associated with a destination of the communication; and
(c) a computer server operable to communicate with said destination party network resource and including memory having computer codes for directing said computer server to:
cause said source party network resource to transmit, in association with the communication, the at least one graphical image via a data network to the destination party network resource for presentation of the at least one graphical image to a communications device associated with the destination.
